# DEMANDE DE BREVET EUROPEEN

(11) **EP 2 213 510 A1**
(43) Date de publication de la demande: **04.08.2010**
(21) Numéro de dépôt: 09180453.4
(22) Date de dépôt: 22.12.2009
(51) Int. Cl.: B60N 3/00, B60R 7/06, B60R 11/02

(54) **Dispositif de support rétractable pour une face avant d'un tableau de bord de véhicule**

(30) Priorité: 29.01.2009 FR 0950542
(71) Demandeur: Peugeot Citroën Automobiles SA, 78140 Vélizy-Villacoublay (FR)
(72) Inventeur: Boboeuf, Marc, 92700, COLOMBES (FR)
(74) Mandataire: Vigand, Régis Louis Michel

(57) **Abrégé**

Un dispositif de support rétractable (D) est destiné à être solidarisé à une face avant (FV) d'un tableau de bord (TB) de véhicule. Ce dispositif (D) comprend i) un élément de support (TR) comprenant une face dite supérieure (FS) et, en au moins une partie latérale d'une partie arrière (PR), un élément de couplage (EC), ii) des moyens de guidage (MG) solidarisés en au moins une zone choisie du tableau de bord et chargés de guider l'élément de couplage (EC) pour permettre un déplacement guidé de la partie arrière (PR) de l'élément de support (TR) entre des positions dites inférieure et supérieure, et iii) des moyens d'entraînement (ME) solidarisés au tableau de bord et à une autre partie latérale de la partie arrière (PR) de l'élément de support (TR) ainsi qu'à une autre portion de cette autre partie latérale de manière à entraîner ce dernier (TR) entre une position rétractée dans laquelle sa partie arrière (PR) est dans la position inférieure et sa face supérieure (FS) est en regard d'une partie de la face avant (FV) et une position déployée dans laquelle sa partie arrière (PR) est dans la position supérieure et sa face supérieure (FS) est orientée vers le haut en vue d'une utilisation de l'élément de support (TR).

## Description

L'invention concerne les équipements (ou accessoires) optionnels qui équipent certains véhicules, éventuellement automobiles, et plus précisément les dispositifs de support qui sont solidarisés au tableau de bord de ces véhicules.

Afin de permettre à un passager avant d'un véhicule, par exemple automobile, d'utiliser un objet, comme par exemple un livre ou un ordinateur portable ou encore une console de jeu, sans avoir à le porter avec ses mains ou à le poser sur ses jambes, il a été proposé de solidariser un dispositif de support au tableau (ou planche) de bord d'un véhicule.

Ainsi, il a été proposé, notamment dans les documents brevet FR 2709101, JP 10-974, JP 2001-180358, WO 08100216, JP 2000-335314 et JP 2003-226197, de définir dans le tableau de bord un logement muni d'une porte (ou couvercle) et de loger à l'intérieur de ce logement une tablette repliable et articulée ou coulissante ou encore télescopique.

Ces solutions présentent l'inconvénient d'occuper tout ou partie d'un logement dans le tableau de bord et donc interdisent d'utiliser ce logement, au moins partiellement, pour ranger des objets. En outre, certaines de ces solutions mettent en oeuvre des mécanismes articulés qui peuvent être assez complexes et/ou qui sont fragiles et/ou qui sont onéreux.

L'invention a pour but de proposer un dispositif de support alternatif pouvant être solidarisé à un tableau de bord de véhicule, éventuellement automobile, sans occuper tout ou partie d'un logement (dédié ou non).

Elle propose plus précisément un dispositif de support rétractable, destiné à équiper une face avant d'un tableau de bord de véhicule, éventuellement automobile, et comprenant :
- un élément de support comprenant une face dite supérieure et, en au moins une partie latérale d'une partie arrière, un élément de couplage,
- des moyens de guidage propres à être solidarisés en au moins une zone choisie du tableau de bord et à guider l'élément de couplage pour permettre un déplacement guidé de la partie arrière de l'élément de support entre des positions dites inférieure et supérieure, et
- des moyens d'entraînement propres à être solidarisés au tableau de bord et à une autre partie latérale de la partie arrière de l'élément de support ainsi qu'à une autre portion de cette autre partie latérale de manière à entraîner l'élément de support entre une position rétractée, dans laquelle sa partie arrière est dans la position inférieure et sa face supérieure est en regard d'une partie de la face avant du tableau de bord, et une position déployée, dans laquelle sa partie arrière est dans la position supérieure et sa face supérieure est orientée vers le haut en vue d'une utilisation de l'élément de support.

Le dispositif selon l'invention peut comporter d'autres caractéristiques qui peuvent être prises séparément ou en combinaison, et notamment :
- ses moyens d'entraînement peuvent être agencés pour placer son élément de support dans une position déployée dans laquelle il est incliné d'un angle aigu prédéfini par rapport à un plan horizontal ;
- ses moyens de guidage peuvent comprendre au moins une glissière munie d'un logement central propre à permettre le coulissement de l'élément de couplage ;
- ses moyens d'entraînement peuvent comprendre, d'une première part, un premier vérin comportant une première extrémité destinée à être montée à rotation sur le tableau de bord et une seconde extrémité montée à rotation sur une autre partie latérale de la partie arrière de l'élément de support, et agencé pour entraîner la partie arrière entre ses positions inférieure et supérieure, et d'autre part, un second vérin comportant une première extrémité destinée à être montée à rotation sur le tableau de bord et une seconde extrémité montée à rotation sur cette autre partie latérale de l'élément de support, et agencé pour entraîner cette autre portion entre des première et seconde positions dans lesquelles son élément de support est respectivement dans les positions rétractée et déployée ;
   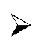 l'élément de couplage peut être solidarisé à une première partie latérale de la partie arrière de l'élément de support, et les secondes extrémités des premier et second vérins peuvent être solidarisées à une seconde partie latérale, opposée à la première partie latérale, respectivement au niveau d'une portion de la partie arrière et d'une autre portion ;
- il peut comprendre des moyens de verrouillage agencés pour coupler (ou solidariser) de façon réversible la partie arrière de l'élément de support à la face avant du tableau de bord ;
- dans une première variante, ses moyens d'entraînement peuvent comprendre i) un premier bras rigide, comportant une première extrémité destinée à être montée à rotation sur le tableau de bord et une seconde extrémité montée à rotation sur une autre partie latérale de la partie arrière de l'élément de support, et agencé pour participer à l'entraînement de la partie arrière entre ses positions inférieure et supérieure, et ii) un second bras rigide, comportant une première extrémité destinée à être montée à rotation sur le tableau de bord et une seconde extrémité montée à rotation sur une autre portion de l'autre partie latérale, et agencé pour participer à l'entraînement de la partie arrière entre ses positions inférieure et supérieure ;
   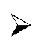 ses moyens de guidage peuvent être agencés sous la forme d'au moins un bras articulé déployable, comportant une première extrémité destinée à être montée à rotation sur une première face latérale du tableau de bord et une seconde extrémité couplée à l'élément de couplage, lequel est solidarisé à une première partie latérale de la partie arrière de l'élément de support. Le bras articulé est alors agencé, une fois déployé, pour bloquer la partie arrière de l'élément de support dans sa position supérieure. Par ailleurs, les secondes extrémités des premier et second bras rigides peuvent être solidarisées à deux portions distantes d'une seconde partie latérale de l'élément de support, opposée à la première partie latérale de la partie arrière ;
   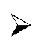 en variante les moyens de guidage peuvent être agencés sous la forme d'au moins un vérin de poussée, comportant une première extrémité destinée à être montée à rotation sur une première face latérale du tableau de bord et une seconde extrémité couplée à l'élément de couplage, lequel est solidarisé à une première partie latérale de la partie arrière de l'élément de support. Le vérin de poussée est alors agencé, une fois déployé, pour bloquer la partie arrière de l'élément de support dans sa position supérieure. par ailleurs, les secondes extrémités des premier et second bras rigides peuvent être solidarisées à deux portions distantes d'une seconde partie latérale de l'élément de support, opposée à la première partie latérale de la partie arrière ;
- l'élément de support peut comprendre au niveau d'une partie avant de sa face supérieure des moyens de blocage agencés pour constituer une butée d'arrêt pour au moins un objet placé sur la face supérieure ;
- son élément de support peut être agencé de manière à constituer un élément d'obturation pour un rangement défini dans le tableau de bord, lorsqu'il est placé dans sa position rétractée ;
- son élément de support peut comprendre au moins un logement interne débouchant au niveau de la face supérieure et propre à loger au moins un objet ;
- la face supérieure FS de son élément de support TR peut être définie par une pièce rapportée déplaçable ;
   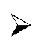 la pièce rapportée déplaçable peut être une tablette montée à coulissement sur l'élément de support TR de manière à pouvoir être déplacée entre une position rétractée vers l'arrière et une position déployée vers l'avant dans laquelle elle prolonge l'élément de support ;
      - les moyens de blocage peuvent être définis au niveau d'une extrémité avant de la tablette coulissante ;
      - la tablette coulissante peut être agencée pour constituer un couvercle de fermeture du (des) logement(s) interne(s) lorsqu'elle est placée dans sa position rétractée ;
   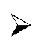 dans une variante, la pièce rapportée déplaçable peut être une plaque montée à rotation sur la partie arrière de l'élément de support TR de manière à pouvoir être déplacée entre une position redressée vers l'arrière dans laquelle elle permet d'accéder au logement interne et une position rabattue vers l'avant dans laquelle elle constitue un couvercle de fermeture interdisant l'accès au logement interne ;
      - les moyens de blocage peuvent être définis au niveau d'une extrémité avant de la plaque rotative.

L'invention propose également un tableau de bord de véhicule équipé d'un dispositif de support rétractable du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe transversale selon un plan médian contenant la direction verticale, une partie d'un tableau de bord de véhicule automobile équipée d'un premier exemple de réalisation de dispositif de support rétractable selon l'invention, placé dans une position rétractée,
- la figure 2 illustre schématiquement, dans une vue en coupe transversale selon le plan médian contenant la direction verticale, la partie du tableau de bord de la figure 1 avec seulement les moyens de guidage de son dispositif de support rétractable,
- la figure 3 illustre schématiquement, dans une vue en coupe transversale selon le plan médian contenant la direction verticale, la partie du tableau de bord des figures 1 et 2 avec le dispositif de support rétractable placé dans une position intermédiaire entre ses positions rétractée et déployée,
- la figure 4 illustre schématiquement, dans une vue en coupe transversale selon le plan médian contenant la direction verticale, la partie du tableau de bord des figures 1 et 2 avec le dispositif de support rétractable placé dans sa position déployée,
- la figure 5 illustre schématiquement, dans une vue en coupe transversale selon un plan médian contenant la direction verticale, une partie d'un tableau de bord de véhicule automobile équipée d'un deuxième exemple de réalisation de dispositif de support rétractable selon l'invention, placé dans une position rétractée,
- la figure 6 illustre schématiquement, dans une vue en coupe transversale selon le plan médian contenant la direction verticale, la partie du tableau de bord de la figure 5 avec le dispositif de support rétractable placé dans une position intermédiaire entre ses positions rétractée et déployée,
- la figure 7 illustre schématiquement, dans une vue en coupe transversale selon le plan médian contenant la direction verticale, la partie du tableau de bord de la figure 5 avec le dispositif de support rétractable placé dans sa position déployée,
- la figure 8 illustre schématiquement, dans une vue en coupe transversale selon un plan médian contenant la direction verticale, une partie d'un tableau de bord de véhicule automobile équipée d'un troisième exemple de réalisation de dispositif de support rétractable selon l'invention, placé dans une position rétractée,
- la figure 9 illustre schématiquement, dans une vue en coupe transversale selon le plan médian contenant la direction verticale, la partie du tableau de bord de la figure 8 avec le dispositif de support rétractable placé dans une position intermédiaire entre ses positions rétractée et déployée,
- la figure 10 illustre schématiquement, dans une vue en coupe transversale selon le plan médian contenant la direction verticale, la partie du tableau de bord de la figure 8 avec le dispositif de support rétractable placé dans sa position déployée,
- la figure 11 illustre schématiquement, dans une vue de côté, une variante de réalisation d'un dispositif de support rétractable comprenant une tablette coulissante placée dans une position rétractée (ou fermée),
- la figure 12 illustre schématiquement, dans une vue de côté, la variante de réalisation de dispositif de support rétractable de la figure 11 avec sa tablette coulissante placée dans une position déployée, et avec un logement interne débouchant au niveau de la face supérieure de son élément de support et propre à loger au moins un objet, et
- la figure 13 illustre schématiquement, dans une vue de côté, une autre variante de réalisation d'un dispositif de support rétractable comprenant une plaque rotative placée dans une position redressée (ou ouverte), et deux logements internes débouchant au niveau de la face supérieure de son élément de support et propres chacun à loger au moins un objet.

Les dessins annexés pourront non seulement servir à compléter l'invention, mais aussi contribuer à sa définition, le cas échéant.

L'invention a pour but d'offrir un dispositif de support rétractable (D) destiné à être solidarisé à la face avant (FV) d'un tableau (ou planche) de bord (TB) d'un véhicule, éventuellement automobile.

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout type de véhicule, en particulier terrestre, comprenant un tableau (ou planche) de bord (TB) présentant une face avant (FV).

On entend ici par « face avant (FV) » une face du tableau de bord (TB) qui est orientée vers un siège avant passager d'un véhicule ou vers une zone de l'habitacle du véhicule qui est située à côté de celle où est implanté le siège du conducteur, et qui prolonge une face supérieure située au voisinage du pare-brise (PB).

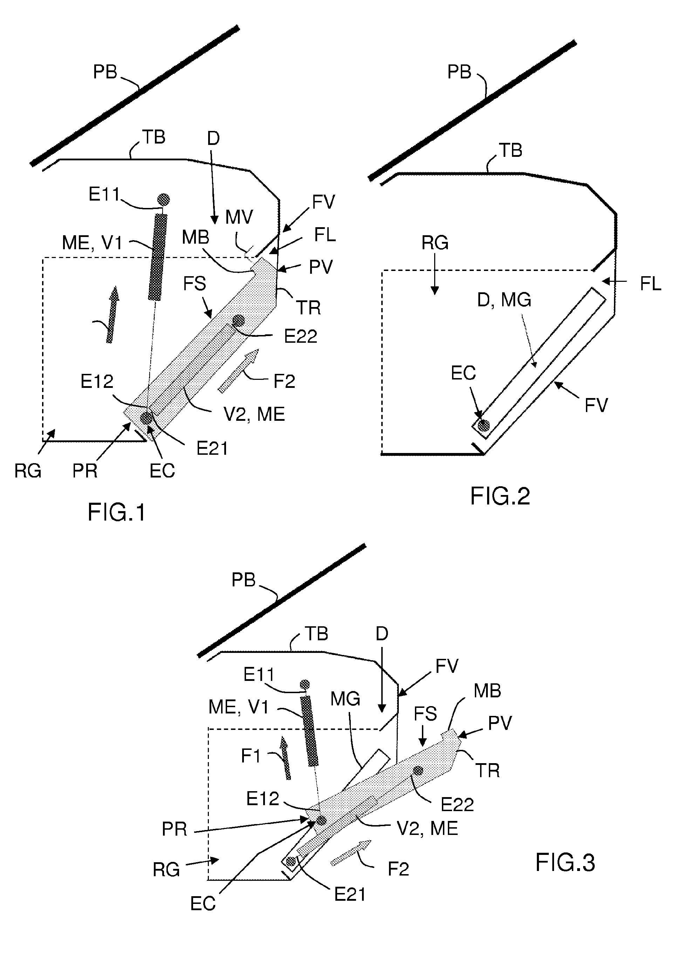

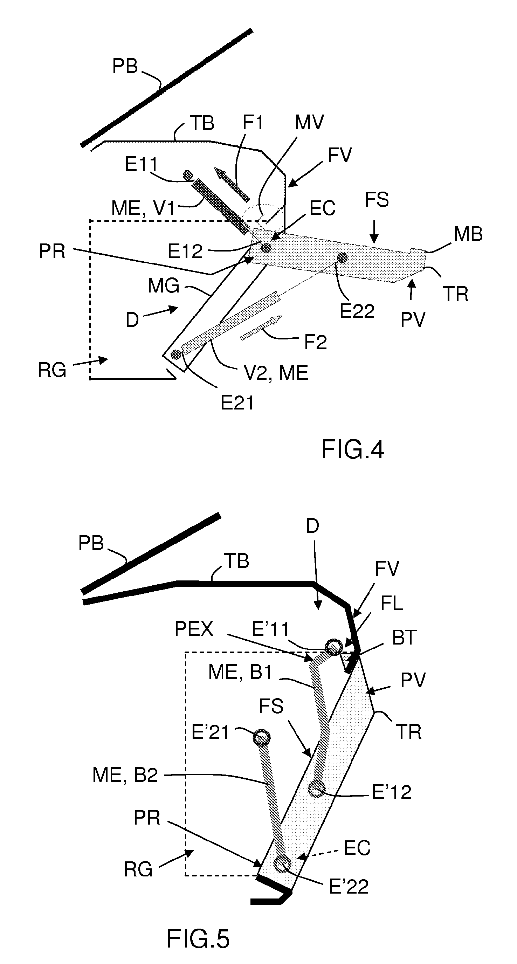

On a schématiquement représenté sur les figures 1 à 10 une partie d'un tableau de bord TB de véhicule automobile, équipée d'un exemple de dispositif de support rétractable D selon l'invention dans une position rétractée (ou rangée ou encore non déployée). On notera que sur les figures 1, 5 et 8 le dispositif D est placé dans sa position rétractée, sur les figures 3, 6 et 9 le dispositif D est placé dans une position intermédiaire et sur les figures 4, 7 et 10 le dispositif D est placé dans une position déployée.

Un tel dispositif (de support rétractable) D comprend au moins un élément de support TR, des moyens de guidage MG et des moyens d'entraînement ME.

L'élément de support TR comprend une face dite supérieure FS qui est destinée à supporter un ou plusieurs objets Oi (i ≥ 1) une fois que ledit élément de support TR a été placé dans sa position déployée (illustrée sur les figures 4, 7 et 10). Cet élément de support TR comprend également des parties arrière PR et avant PV sensiblement opposées. Lorsque l'élément de support TR est placé dans sa position rétractée sa face supérieure FS est orientée vers le tableau de bord TB et sa partie arrière PR est placée à un niveau inférieur à celui où est placée sa partie avant PV (comme illustré sur les figures 1, 5 et 8). Lorsque l'élément de support TR est placé dans sa position déployée sa face supérieure FS est orientée vers l'intérieur de l'habitacle (par exemple vers le siège avant passager) et sa partie arrière PR est de préférence placée à un niveau sensiblement supérieur à celui où est placée sa partie avant PV (comme illustré sur les figures 4, 7 et 10).

L'élément de support TR comprend également au moins un élément de couplage EC dans au moins une partie latérale de sa partie arrière PR. On entend ici par « partie latérale » une partie qui est sensiblement parallèle à la direction longitudinale du véhicule (elle même sensiblement parallèle aux portes latérales de ce dernier). On notera qu'un élément de support TR comprend deux parties latérales opposées, l'une orientée vers une porte latérale du véhicule l'autre orientée vers l'intérieur de l'habitacle du véhicule.

Dans l'exemple de réalisation non limitatif illustré sur les figures, l'élément de support TR ne comprend qu'un unique élément de couplage EC au niveau de sa partie arrière PR (ici la partie droite), sur l'une de ses deux parties latérales.

L'élément de couplage EC est agencé de manière à être déplacé pour permettre un déplacement de façon guidée de la partie arrière de l'élément de support TR entre des positions dites inférieure et supérieure.

La position inférieure de l'élément de couplage EC est partiellement illustrée sur les figures 1, 2, 5 et 8. Lorsque l'élément de couplage EC est placé dans sa position inférieure, l'élément de support TR est placé dans sa position rétractée.

La position supérieure de l'élément de couplage EC est partiellement illustrée sur les figures 4, 7 et 10. Lorsque l'élément de couplage EC est placé dans sa position supérieure, l'élément de support TR est placé dans sa position déployée.

On notera que l'élément de couplage EC peut être soit une pièce rapportée sur la partie arrière PR de l'élément de support TR, soit une partie intégrante de ce dernier (par exemple s'il est réalisé par moulage dans une matière plastique ou synthétique).

On notera également que l'élément de support TR peut par exemple être agencé (ou conformé) de manière à constituer, lorsqu'il est placé dans sa position rétractée, un élément d'obturation (tel qu'une porte ou un volet) pour un rangement RG qui est défini dans le tableau de bord TB. Un tel rangement RG peut par exemple être une boîte à gants. Cela est particulièrement avantageux car cela confère une double fonction à l'élément de support TR.

Les moyens d'entraînement ME sont destinés à être solidarisés, d'une part, au tableau de bord TB (par exemple sur une seconde portion latérale de la face avant FV ou sur une seconde face latérale FL), et d'autre part, à l'une des deux parties latérales de l'élément de support TR, et plus précisément au niveau d'une première portion située dans sa partie arrière PR et d'une seconde portion distante de cette première portion. Par exemple, et comme illustré, la seconde portion de cette partie latérale est située dans une moitié (avant) de l'élément de support TR qui comprend sa partie avant PV, et de préférence plus près du milieu de cette partie latérale que de son extrémité avant libre.

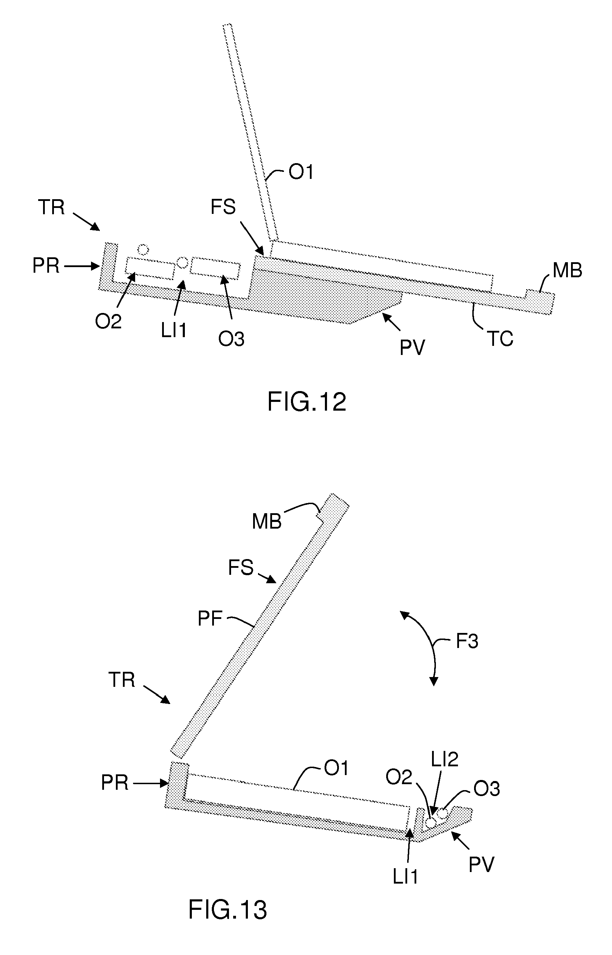

On notera, comme illustré sur les figures 4, 7 et 10 à 13, que les moyens d'entraînement ME peuvent être agencés de manière à placer l'élément de support TR dans une position déployée dans laquelle il se retrouve incliné d'un angle aigu prédéfini par rapport à un plan horizontal. Cet angle aigu est destiné à rendre plus facile pour un passager l'utilisation d'un objet Oi qui est posé sur la face supérieure FS de l'élément de support TR (voir figure 12). Par exemple, cet angle aigu est compris entre environ 1 ° et environ 40°. Par exemple, il est sensiblement égal à environ 10°.

Les moyens de guidage MG sont destinés à être solidarisés en au moins une zone choisie du tableau de bord TB, par exemple sur une première portion latérale de la face avant FV ou sur une première face latérale FL. Ils sont destinés à guider l'élément de couplage EC de l'élément de support TR afin que la partie arrière PR de cet élément de support TR puisse se déplacer (de façon guidée) entre les positions inférieure et supérieure.

Le mode de réalisation de l'élément de couplage EC dépend du mode de réalisation des moyens de guidage MG. Par exemple, dans le premier exemple de réalisation non limitatif illustré sur les figures 1 à 4, les moyens de guidage MG sont réalisés sous la forme d'une unique glissière (ou d'un rail) (voir figure 2). Dans ce cas, l'élément de couplage EC peut être réalisé sous la forme d'un axe (ou plot) fixe qui s'étend sensiblement perpendiculairement à l'une des deux parties latérales (ici la droite) de l'élément de support TR, au niveau de la partie arrière PR de ce dernier, et qui comprend une tête logée dans un logement central de la glissière MG et contrainte de coulisser dans ce logement central. Dans une variante de réalisation, l'élément de couplage EC pourrait être réalisé sous la forme d'un axe libre en rotation, comme par exemple un galet rainuré, éventuellement revêtu d'un habillage amortissant.

Dans le premier exemple de réalisation non limitatif illustré sur les figures 1 à 4, la glissière MG est solidarisée à une face latérale FL définie sensiblement parallèlement aux portes latérales du véhicule dans une partie de la face avant FV du tableau de bord TB.

Dans ce premier exemple de réalisation, dans lequel il n'existe qu'une seule glissière MG coopérant avec un unique élément de couplage EC solidarisé à l'une des deux parties latérales (ici la droite) de l'élément de support TR, les moyens d'entraînement ME doivent être solidarisés en partie à l'autre partie latérale (ici la gauche) afin de maintenir la partie arrière PR de cette dernière sensiblement au même niveau que la partie arrière PR de la partie latérale droite.

Grâce à cet agencement, les moyens d'entraînement ME peuvent entraîner l'élément de support TR entre sa position rétractée (dans laquelle sa partie arrière PR est dans sa position inférieure et sa face supérieure FS est en regard d'une partie de la face avant FV) et sa position déployée (dans laquelle sa partie arrière PR est dans sa position supérieure et sa face supérieure FS est orientée vers le haut en vue d'une utilisation de l'élément de support TR).

Dans le premier exemple de réalisation non limitatif illustré sur les figures 1 à 4, les moyens d'entraînement ME comprennent des premier V1 et second V2 vérins.

Le premier vérin V1 comporte une première extrémité E11, destinée à être montée à rotation sur le tableau de bord TB (ici sur une seconde face latérale FL qui est sensiblement parallèle à celle sur laquelle est solidarisée la glissière MG), et une seconde extrémité E12, montée à rotation sur l'une des deux parties latérales (ici la gauche) de l'élément de support TR au niveau d'une première portion située dans sa partie arrière PR. Il est ainsi agencé pour entraîner la partie arrière PR entre ses positions inférieure et supérieure (comme matérialisé par la flèche F1 sur les figures 1, 3 et 4).

Le second vérin V2 comporte une première extrémité E21, destinée à être montée à rotation sur le tableau de bord TB (ici sur la seconde face latérale FL qui est sensiblement parallèle à celle sur laquelle est solidarisée la glissière MG), et une seconde extrémité E22, montée à rotation sur l'une des deux parties latérales (ici la gauche) de l'élément de support TR au niveau d'une seconde portion située préférentiellement dans sa moitié (avant) qui contient sa partie avant PV. Il est ainsi agencé pour entraîner cette seconde portion de l'élément de support TR entre des première et seconde positions dans lesquelles il (TR) est respectivement dans ses positions rétractée (voir figure 1) et déployée (voir figure 4). Cet entraînement de la seconde portion est matérialisé par la flèche F2 sur les figures 1, 3 et 4.

La première extrémité E11 du premier vérin V1 est, comme illustré, préférentiellement montée à rotation sur la face avant FV du tableau de bord TB à un niveau qui est supérieur à celui où est placée la première extrémité E21 du second vérin V2.

On comprendra qu'en contrôlant temporellement les fonctionnements respectifs des premier V1 et second V2 vérins, on définit une cinématique qui permet d'entraîner l'élément de support TR entre ses positions rétractée et déployée.

Pour faire passer l'élément de support TR de sa position rétractée vers sa position déployée, on réduit la longueur du premier vérin V1 et on augmente la longueur du second vérin V2. Inversement, pour faire passer l'élément de support TR de sa position déployée vers sa position rétractée, on augmente la longueur du premier vérin V1 et on réduit la longueur du second vérin V2.

Les moyens d'entraînement ME peuvent être contrôlés conjointement par un organe de commande actionnable par un passager. Dans ce cas, le déverrouillage de l'élément de support TR par un passager (au moyen de l'organe de commande) provoque l'animation des moyens d'entraînement ME et donc le déploiement automatique de l'élément de support TR.

Afin d'améliorer la stabilité de l'élément de support TR lorsqu'il est dans sa position déployée, on peut, comme illustré non limitativement sur les figures 1 et 4, solidariser sa partie arrière PR à la face avant FV du tableau de bord TB. Pour ce faire, on peut par exemple solidariser à la face avant FV du tableau de bord TB, dans la zone où doit être placée la partie arrière PR de l'élément de support TR, des moyens de verrouillage MV agencés de manière à coupler la partie arrière PR de façon réversible à cette face avant FV. Ces moyens de verrouillage MV peuvent par exemple se présenter sous la forme d'un crochet rotatif ou d'une patte coulissante que le passager vient placer dans une position de verrouillage une fois que la partie arrière PR de l'élément de support TR est parvenue dans sa position supérieure (déployée), grâce aux moyens d'entraînement ME. Par exemple, ce crochet (ou cette patte) MV peut coopérer avec une partie dédiée à cet effet dans la partie arrière PR de l'élément de support TR. Cette partie dédiée se présente par exemple sous la forme d'un logement. On notera que l'on peut également envisager que le crochet ou la patte soit fixe et qu'il coopère automatiquement avec un logement de la partie arrière PR de l'élément de support TR lorsque ce dernier parvient dans sa position déployée, grâce à une cinématique adaptée des moyens d'entraînement ME (et donc sans intervention d'un passager). On notera également que les moyens de verrouillage pourraient être définis sur la partie arrière PR de l'élément de support TR et agencés de manière à coopérer avec une partie adaptée définie sur la face avant FV du tableau de bord TB.

On se réfère maintenant aux figures 5 à 7 pour décrire un deuxième exemple de réalisation non limitatif d'un dispositif D selon l'invention.

Dans ce deuxième exemple de réalisation, les moyens d'entraînement ME comprennent des premier B1 et second B2 bras rigides.

Le premier bras rigide B1 comporte une première extrémité E'11, destinée à être montée à rotation sur le tableau de bord TB (ici sur une seconde face latérale opposée à la première FL) et une seconde extrémité E'12, montée à rotation sur l'une des deux parties latérales (ici la gauche, située du côté de la seconde face latérale) de l'élément de support TR au niveau d'une première portion située préférentiellement dans une partie sensiblement centrale. Il est ainsi agencé pour participer à l'entraînement guidé de la partie arrière PR entre ses positions inférieure et supérieure.

Le second bras rigide B2 comporte une première extrémité E'21, destinée à être montée à rotation sur le tableau de bord TB (ici sur la seconde face latérale), et une seconde extrémité E'22, montée à rotation sur l'une des deux parties latérales (ici la gauche) de l'élément de support TR au niveau d'une seconde portion située dans sa partie arrière PR. Il est ainsi agencé pour participer, conjointement avec le premier bras rigide B1, à l'entraînement guidé de cette seconde portion de l'élément de support TR (et donc de la partie arrière PR) entre les positions inférieure et supérieure.

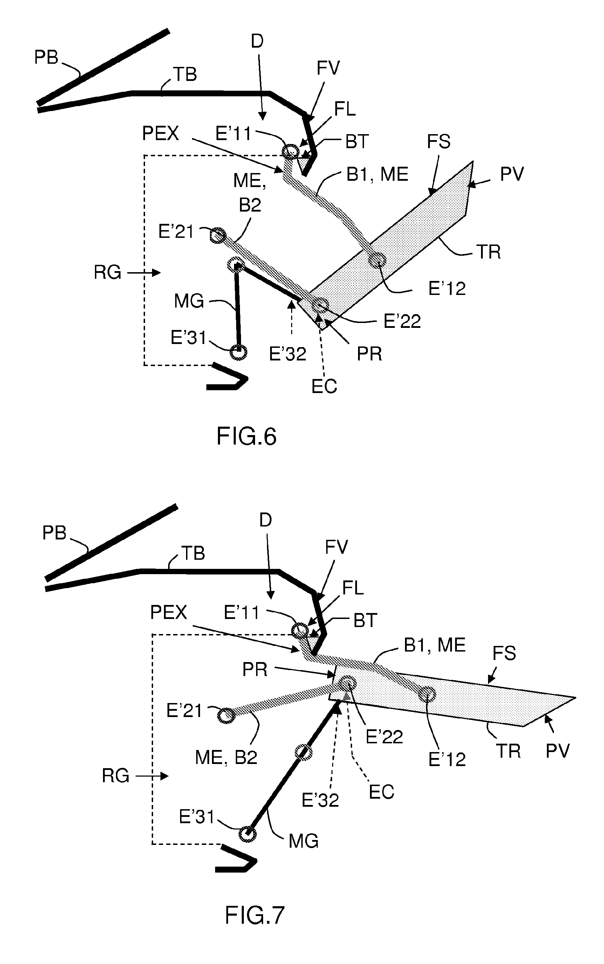

On notera que lorsque la partie arrière PR est dans sa position inférieure (voir figure 5) l'élément de support TR est dans sa position rétractée, tandis que lorsque la partie arrière PR est dans sa position supérieure (voir figure 7) l'élément de support TR est dans sa position déployée.

La première extrémité E'11 du premier bras rigide B1 est, comme illustré, préférentiellement montée à rotation sur la face avant FV du tableau de bord TB à un niveau qui est supérieur à celui où est placée la première extrémité E'21 du second bras rigide B2. La seconde extrémité E'12 du premier bras rigide B1 est, comme illustré, préférentiellement montée à rotation sur l'une des deux parties latérales (ici la gauche) de l'élément de support TR à un niveau qui, dans la position rétractée, est inférieur à celui où est placée la première extrémité E'21 du second bras rigide B2.

Dans ce deuxième exemple de réalisation, l'élément de couplage EC peut être également réalisé sous la forme d'un axe (ou plot) fixe qui s'étend sensiblement perpendiculairement à l'une des deux parties latérales (ici la droite) de l'élément de support TR, au niveau de la partie arrière PR de ce dernier.

Par ailleurs, et comme illustré non limitativement sur les figures 5 à 7, dans ce deuxième exemple de réalisation, les moyens de guidage MG sont agencés sous la forme d'au moins un bras articulé déployable. Ce dernier (MG) comporte une première extrémité E'31 qui est montée à rotation sur le tableau de bord TB (ici sur la première face latérale FL) et une seconde extrémité E'32 qui est montée à rotation sur la seconde partie latérale (ici la droite, située du côté de la première face latérale FL) de l'élément de support TR, de préférence au niveau de l'élément de couplage EC.

Comme illustré sur les figures 5 à 7, ce bras articulé déployable MG est agencé pour guider la partie arrière PR de l'élément de support TR entre ses positions inférieure et supérieure. Il est également agencé, une fois déployé, pour bloquer la partie arrière PR de l'élément de support TR dans sa position supérieure. On comprendra qu'il l'empêche de poursuivre sa rotation au-delà d'un secteur angulaire de valeur choisie.

Pour ce faire, le bras articulé MG peut par exemple être constitué de deux parties reliées l'une à l'autre par une articulation (par exemple un axe de rotation). Dans la position inférieure, les deux parties du bras articulé MG sont proches l'une de l'autre (éventuellement superposées), tandis que dans la position supérieure (voir figure 7), les deux parties du bras articulé MG se prolongent l'une l'autre et sont en quelque sorte arc-boutées.

Il est important de noter que le dispositif D pourrait comprendre deux bras articulés déployables MG, de part et d'autre de son élément de support TR. Dans ce cas, un second bras articulé déployable MG vient compléter celui qui a été décrit ci-avant et qui se trouve situé du côté droit. Ce second bras articulé déployable MG comporte une première extrémité qui est montée à rotation sur le tableau de bord TB (ici sur la seconde face latérale) et une seconde extrémité qui est montée à rotation sur la première partie latérale (ici la gauche, située du côté de la seconde face latérale) de l'élément de support TR, de préférence au niveau de la seconde extrémité E'22 du second bras rigide B2.

La cinématique d'entraînement de l'élément de support TR entre ses positions rétractée et déployée est donc ici définie par les formes et lieux de fixation respectifs des premier B1 et second B2 bras rigides et du (des) bras articulé(s) MG.

On comprendra que c'est l'utilisateur qui provoque soit le déploiement de l'élément de support TR en tirant vers lui sa partie avant PV, soit la rétractation de l'élément de support TR en poussant sa partie avant PV vers le tableau de bord TB.

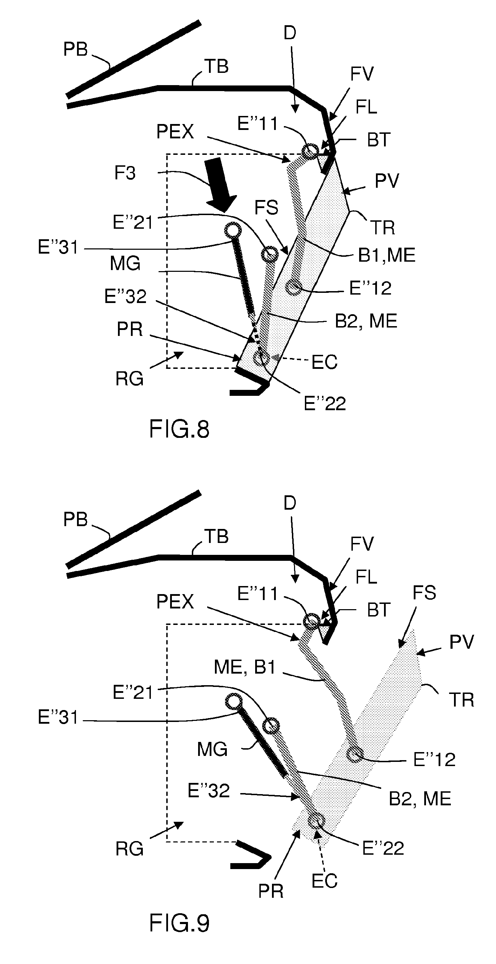

On se réfère maintenant aux figures 8 à 10 pour décrire un troisième exemple de réalisation non limitatif d'un dispositif D selon l'invention.

Ce troisième exemple de réalisation présente de nombreux points communs avec le deuxième exemple de réalisation. En fait ce qui l'en différencie c'est le fait qu'il comprend des moyens de guidage MG qui sont agencés sous la forme d'au moins un vérin de poussée au lieu d'un bras articulé. Les moyens d'entraînement ME sont donc sensiblement identiques dans les deuxième et troisième exemples de réalisation.

Ce vérin de poussée MG comporte une première extrémité E"31 qui est montée à rotation sur le tableau de bord TB (ici sur la première face latérale FL) et une seconde extrémité E"32 qui est montée à rotation sur la seconde partie latérale (ici la droite) de l'élément de support TR, de préférence au niveau de l'élément de couplage EC.

Comme illustré sur les figures 8 à 10, le vérin de poussée MG est agencé pour guider la partie arrière PR de l'élément de support TR entre ses positions inférieure et supérieure. Il est également agencé, une fois déployé (c'est-à-dire en fin de course), pour bloquer la partie arrière PR de l'élément de support TR dans sa position supérieure. On comprendra qu'il l'empêche de poursuivre sa rotation au-delà d'un secteur angulaire de valeur choisie.

Il est important de noter que le dispositif D pourrait comprendre deux vérins de poussée MG, de part et d'autre de son élément de support TR. Dans ce cas, un second vérin de poussée MG vient compléter celui qui a été décrit ci-avant et qui se trouve situé du côté droit. Ce second vérin de poussée MG comporte une première extrémité qui est montée à rotation sur le tableau de bord TB (ici sur la seconde face latérale) et une seconde extrémité qui est montée à rotation sur la première partie latérale (ici la gauche, située du côté de la seconde face latérale) de l'élément de support TR, de préférence au niveau de la seconde extrémité E'22 du second bras rigide B2.

La cinématique d'entraînement de l'élément de support TR entre ses positions rétractée et déployée est donc ici définie par les formes et lieux de fixation respectifs des premier B1 et second B2 bras rigides et du (des) vérin(s) de poussée MG.

Pour faire passer l'élément de support TR de sa position rétractée vers sa position déployée, on augmente la longueur du (des) vérin(s) de poussée MG (flèche F3 de la figure 8). Inversement, pour faire passer l'élément de support TR de sa position déployée vers sa position rétractée, on réduit la longueur du (des) vérin(s) de poussée MG.

Le fonctionnement du (des) vérin(s) de poussée MG peut être éventuellement contrôlé par un organe de commande actionnable par un utilisateur. Mais, cela n'est pas obligatoire. On peut en effet envisager que lorsque l'élément de support TR est verrouillé dans sa position rétractée, le(s) vérin(s) de poussée MG est (sont) alors rétracté(s) sous contrainte, et donc lorsque l'on déverrouille l'élément de support TR on libère le(s) vérin(s) de poussée MG qui se déploie(nt) alors automatiquement en provoquant le déploiement de l'élément de support TR. La rétractation de l'élément de support TR est alors assurée par l'utilisateur au moyen d'une poussée exercée sur la partie avant PV de l'élément de support TR en direction du tableau de bord TB.

Dans le deuxième mode de réalisation, tout comme dans le troisième, le premier bras rigide B1 peut comprendre une portion dite supérieure PEX qui est terminée par sa première extrémité E'11 ou E"11 et conformée de manière à coopérer avec une butée supérieure BT définie en un endroit choisi du tableau de bord TB. Cette butée supérieure BT est destinée à bloquer le déplacement de la partie arrière PR de l'élément de support TR dans sa position supérieure lorsque ce dernier est déployé, et plus précisément à empêcher le basculement de l'élément de support TR lorsqu'il supporte une charge sur sa face supérieure FS. La stabilité de l'élément de support TR est ainsi améliorée.

Par ailleurs, dans le deuxième mode de réalisation, tout comme dans le troisième, le tableau de bord TB peut être conformé, au niveau de la zone qui accueille la partie arrière PR de l'élément de support TR, de manière définir une butée inférieure BT destinée à bloquer le déplacement de la partie arrière PR de l'élément de support TR dans sa position inférieure lorsque ce dernier est rétracté.

Par ailleurs, l'élément de support TR peut, comme illustré sur les figures 1, 3, 4 et 11 à 13, comprendre dans sa partie avant PV, au niveau de sa face supérieure FS, des moyens de blocage MB constituant une butée d'arrêt pour au moins un objet Oi placé sur la face supérieure FS. Une telle butée d'arrêt MB est particulièrement utile lorsque, comme illustré, l'élément de support TR est incliné d'un angle aigu prédéfini par rapport au plan horizontal quand il est dans sa position déployée. Ces moyens de blocage MB peuvent être soit une ou plusieurs pièces rapportées sur la partie avant PV de l'élément de support TR, soit une ou plusieurs parties intégrantes de cette partie avant PV (par exemple si elle est réalisée par moulage dans une matière plastique ou synthétique).

D'autre part, comme illustré non limitativement sur les figures 12 et 13, l'élément de support TR peut comprendre au moins un logement interne LIj qui débouche au niveau de sa face supérieure FS. Chaque logement interne Llj est destiné à loger au moins un objet Oi, comme par exemple un livre, un ordinateur portable 01 (voir figure 13), une console de jeu, des câbles de connexion ou des crayons 02 et 03 (voir figures 12 et 13). Dans ce cas, l'élément de support TR assure non seulement une fonction de support mais également une fonction de rangement.

Dans l'exemple non limitatif illustré sur la figure 12, l'élément de support TR comprend un unique logement interne LI1 situé dans une moitié arrière (comprenant sa partie arrière PR). Dans l'exemple non limitatif illustré sur la figure 13, l'élément de support TR comprend un premier logement interne LI1 pouvant loger un objet relativement volumineux, comme par exemple un ordinateur portable 01, et un second logement 02 situé dans sa partie avant PV et pouvant loger de petits objets (peu volumineux), comme par exemple un crayon ou un câble de connexion 02 ou 03.

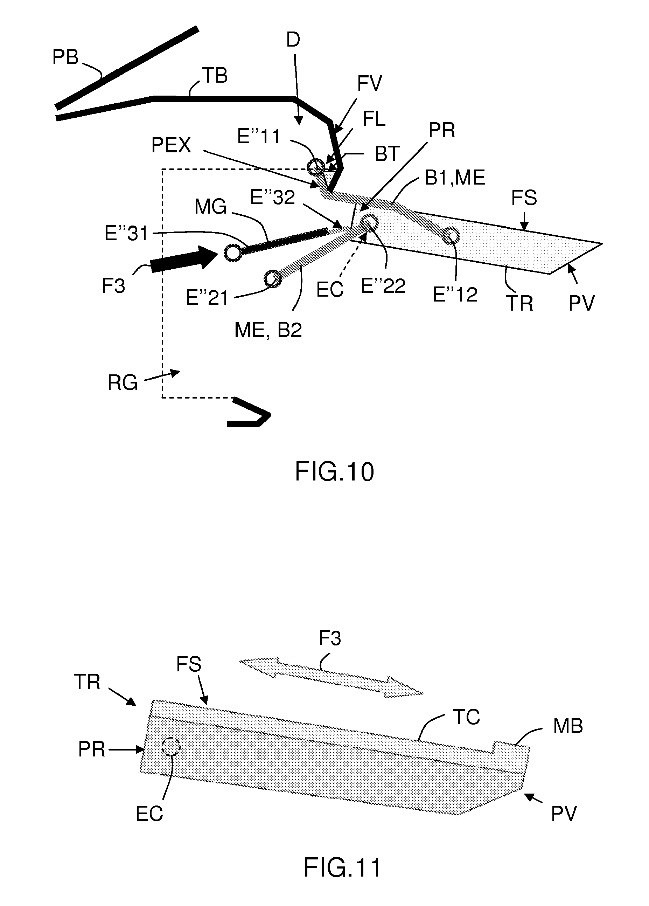

On notera, comme illustré non limitativement sur les figures 11 à 13, que la face supérieure FS de l'élément de support TR peut être définie par une pièce rapportée déplaçable, comme par exemple une tablette TC montée à coulissement (voir figure 12) ou une plaque PF montée à rotation sur sa partie arrière PR (voir figure 13).

On comprendra que l'utilisation d'une tablette coulissante TC nécessite que l'élément de support TR comporte deux glissières ou rails parallèles dans lesquel(le)s cette tablette coulissante TC peut coulisser dans un plan (d'avant en arrière) de manière à pouvoir être déplacée entre une position rétractée vers l'arrière (illustrée sur la figure 11) et une position déployée vers l'avant (illustrée sur la figure 12) dans laquelle elle prolonge l'élément de support TR.

Dans ce cas, les éventuels moyens de blocage MB (formant butée d'arrêt) sont définis au niveau de l'extrémité avant PV de la tablette coulissante TC.

On notera que la tablette coulissante TC peut soit servir uniquement à augmenter la surface de support (ou portage) de l'élément de support TR, soit servir à augmenter la surface de support (ou portage) de l'élément de support TR et/ou de couvercle de fermeture pour un ou plusieurs logements internes LIj (ici j = 1) lorsqu'elle est placée dans sa position rétractée.

De même, on comprendra que l'utilisation d'une plaque rotative PF nécessite que l'élément de support TR comporte des moyens formant charnière(s) de manière à permettre le déplacement de la plaque rotative PF entre une position redressée vers l'arrière (illustrée sur la figure 13) permettant d'accéder à un ou plusieurs logements internes LIj (ici j = 1 ou 2), et une position rabattue vers l'avant (illustrée sur la figure 11) dans laquelle elle constitue un couvercle de fermeture interdisant l'accès au(x) logement(s) interne(s) LIj.

Dans ce cas, les éventuels moyens de blocage MB (formant butée d'arrêt) sont définis au niveau de l'extrémité avant de la plaque rotative PF.

La pièce rapportée déplaçable TC ou PF peut être réalisée dans le même matériau que l'élément de support TR. Ainsi, elle peut par exemple être réalisée par moulage dans une matière plastique ou synthétique. Mais, elle peut être également réalisée dans un matériau différent de celui constituant l'élément de support TR.

L'invention ne se limite pas aux modes de réalisation de dispositif de support rétractable et de tableau de bord décrits ci-avant, seulement à titre d'exemple, mais elle englobe toutes les variantes que pourra envisager l'homme de l'art dans le cadre des revendications ci-après.

## Revendications

1. Dispositif de support rétractable (D) pour une face avant (FV) d'un tableau de bord (TB) de véhicule, **caractérisé en ce qu'**il comprend i) un élément de support (TR) comprenant une face dite supérieure (FS) et, en au moins une partie latérale d'une partie arrière (PR), un élément de couplage (EC), ii) des moyens de guidage (MG) solidarisés en au moins une zone choisie du tableau de bord et chargés de guider l'élément de couplage (EC) pour permettre un déplacement guidé de la partie arrière (PR) de l'élément de support (TR) entre des positions dites inférieure et supérieure, et iii) des moyens d'entraînement (ME) propres à être solidarisés audit tableau de bord (TB) et à une autre partie latérale de ladite partie arrière (PR) de l'élément de support (TR) ainsi qu'à une autre portion de cette autre partie latérale de manière à entraîner ce dernier (TR) entre une position rétractée, dans laquelle sa partie arrière (PR) est dans ladite position inférieure et sa face supérieure (FS) est en regard d'une partie de ladite face avant (FV), et une position déployée, dans laquelle sa partie arrière (PR) est dans ladite position supérieure et sa face supérieure (FS) est orientée vers le haut en vue d'une utilisation dudit élément de support (TR).

2. Dispositif selon la revendication 1, **caractérisé en ce que** lesdits moyens d'entraînement (ME) sont agencés pour placer ledit élément de support (TR) dans une position déployée dans laquelle il est incliné d'un angle aigu prédéfini par rapport à un plan horizontal.

3. Dispositif selon l'une des revendications 1 et 2, **caractérisé en ce que** lesdits moyens de guidage (MG) comprennent au moins une glissière munie d'un logement central propre à permettre le coulissement dudit élément de couplage (EC).

4. Dispositif selon l'une des revendications 1 à 3, **caractérisé en ce que** lesdits moyens d'entraînement (ME) comprennent i) un premier vérin (V1) comportant une première extrémité destinée à être montée à rotation sur ledit tableau de bord (TB) et une seconde extrémité montée à rotation sur une autre partie latérale de la partie arrière (PR) de l'élément de support (TR), et agencé pour entraîner ladite partie arrière (PR) entre ses positions inférieure et supérieure, et ii) un second vérin (V2) comportant une première extrémité destinée à être montée à rotation sur ledit tableau de bord (TB) et une seconde extrémité montée à rotation sur une autre portion de ladite autre partie latérale, et agencé pour entraîner cette autre portion entre des première et seconde positions dans lesquelles son élément de support (TR) est respectivement dans lesdites positions rétractée et déployée.

5. Dispositif selon la revendication 4, **caractérisé en ce que** ledit élément de couplage (EC) est solidarisé à une première partie latérale de la partie arrière (PR) de l'élément de support (TR), et lesdites secondes extrémités des premier (V1) et second (V2) vérins sont solidarisées à une seconde partie latérale, opposée à ladite première partie latérale, respectivement au niveau d'une portion de ladite partie arrière (PR) et d'une autre portion.

6. Dispositif selon l'une des revendications 1 à 5, **caractérisé en ce qu'**il comprend des moyens de verrouillage (MV) agencés pour coupler de façon réversible ladite partie arrière (PR) de l'élément de support (TR) à ladite face avant (FV) du tableau de bord (TB).

7. Dispositif selon l'une des revendications 1 et 2, **caractérisé en ce que** lesdits moyens d'entraînement (ME) comprennent i) un premier bras rigide (B1), comportant une première extrémité destinée à être montée à rotation sur ledit tableau de bord (TB) et une seconde extrémité montée à rotation sur une autre partie latérale de la partie arrière (PR) de l'élément de support (TR), et agencé pour participer à l'entraînement de ladite partie arrière (PR) entre ses positions inférieure et supérieure, et ii) un second bras rigide (B2), comportant une première extrémité destinée à être montée à rotation sur ledit tableau de bord (TB) et une seconde extrémité montée à rotation sur une autre portion de ladite autre partie latérale, et agencé pour participer à l'entraînement de ladite partie arrière (PR) entre ses positions inférieure et supérieure.

8. Dispositif selon la revendication 7, **caractérisé en ce que** lesdits moyens de guidage (MG) sont agencés sous la forme d'au moins un bras articulé déployable, comportant une première extrémité destinée à être montée à rotation sur une première face latérale (FL) dudit tableau de bord (TB) et une seconde extrémité couplée audit élément de couplage (EC), lequel est solidarisé à une première partie latérale de la partie arrière (PR) de l'élément de support (TR), ledit bras articulé (MG) étant en outre agencé, une fois déployé, pour bloquer ladite partie arrière (PR) de l'élément de support (TR) dans sa position supérieure, et **en ce que** lesdites secondes extrémités des premier (B1) et second (B2) bras rigides sont solidarisées à deux portions distantes d'une seconde partie latérale de l'élément de support (TR), opposée à ladite première partie latérale de la partie arrière (PR).

9. Dispositif selon la revendication 7, **caractérisé en ce que** lesdits moyens de guidage (MG) sont agencés sous la forme d'au moins un vérin de poussée, comportant une première extrémité destinée à être montée à rotation sur une première face latérale (FL) dudit tableau de bord (TB) et une seconde extrémité couplée audit élément de couplage (EC), lequel est solidarisé à une première partie latérale de la partie arrière (PR) de l'élément de support (TR), ledit vérin de poussée (MG) étant en outre agencé, une fois déployé, pour bloquer ladite partie arrière (PR) de l'élément de support (TR) dans sa position supérieure, et **en ce que** lesdites secondes extrémités des premier (B1) et second (B2) bras rigides sont solidarisées à deux portions distantes d'une seconde partie latérale de l'élément de support (TR), opposée à ladite première partie latérale de la partie arrière (PR).

10. Dispositif selon l'une des revendications 7 à 9, **caractérisé en ce que** ledit premier bras rigide (B1) comprend une portion dite supérieure (PEX) terminée par sa première extrémité et conformée de manière à coopérer avec une butée supérieure (BT) définie en un endroit choisi dudit tableau de bord (TB) pour bloquer le déplacement de ladite partie arrière (PR) de l'élément de support (TR) dans sa position supérieure.

11. Dispositif selon l'une des revendications 1 à 10, **caractérisé en ce que** ledit élément de support (TR) comprend au niveau d'une partie avant (PV) de sa face supérieure (FS) des moyens de blocage (MB) agencés pour constituer une butée d'arrêt pour au moins un objet (Oi) placé sur ladite face supérieure (FS).

12. Dispositif selon l'une des revendications 1 à 11, **caractérisé en ce que** ledit élément de support (TR) est agencé de manière à constituer un élément d'obturation pour un rangement (RG) défini dans ledit tableau de bord (TB) lorsqu'il est placé dans sa position rétractée.

13. Dispositif selon l'une des revendications 1 à 12, **caractérisé en ce que** ledit élément de support (TR) comprend au moins un logement interne (LIj) débouchant au niveau de ladite face supérieure (FS) et propre à loger au moins un objet (Oi).

14. Dispositif selon l'une des revendications 1 à 13, **caractérisé en ce que** ladite face supérieure (FS) de l'élément de support (TR) est définie par une pièce rapportée déplaçable (TC ; PF).

15. Dispositif selon la revendication 14, **caractérisé en ce que** ladite pièce rapportée déplaçable est une tablette (TC) montée à coulissement sur ledit élément de support (TR) de manière à pouvoir être déplacée entre une position rétractée vers l'arrière et une position déployée vers l'avant dans laquelle elle prolonge ledit élément de support (TR).

16. Dispositif selon la combinaison des revendications 11 et 15, **caractérisé en ce que** lesdits moyens de blocage (MB) sont définis au niveau d'une extrémité avant de ladite tablette coulissante (TC).

17. Dispositif selon la combinaison des revendications 13 et 15, **caractérisé en ce que** ladite tablette coulissante (TC) est agencée pour constituer un couvercle de fermeture dudit logement interne (LIj) lorsqu'elle est placée dans sa position rétractée.

18. Dispositif selon la combinaison des revendications 13 et 14, **caractérisé en ce que** ladite pièce rapportée déplaçable est une plaque (PF) montée à rotation sur ladite partie arrière (PR) de l'élément de support (TR) de manière à pouvoir être déplacée entre une position redressée vers l'arrière dans laquelle elle permet d'accéder audit logement interne (LIj) et une position rabattue vers l'avant dans laquelle elle constitue un couvercle de fermeture interdisant l'accès audit logement interne (LIj).

19. Dispositif selon la combinaison des revendications 11 et 18, **caractérisé en ce que** lesdits moyens de blocage (MB) sont définis au niveau d'une extrémité avant de ladite plaque rotative (PF).

20. Tableau de bord (TB) pour un véhicule, **caractérisé en ce qu'**il comprend un dispositif de support rétractable (D) selon l'une des revendications 1 à 19.
